# EUROPEAN PATENT SPECIFICATION

(11) **EP 4 357 171 B1**
(45) Date of publication and mention of the grant of the patent: **16.07.2025**
(21) Application number: 23204530.2
(22) Date of filing: 19.10.2023
(51) Int. Cl.: B60H 1/00, F16C 7/02, F16C 11/04

(54) **ASSEMBLY COMPRISING A ROTATING ELEMENT AND A TIE-ROD**
ANORDNUNG MIT EINEM ROTIERENDEN ELEMENT UND EINER ZUGSTANGE
ENSEMBLE COMPRENANT UN ÉLÉMENT ROTATIF ET UNE BIELLETTE DE LIAISON

(30) Priority: 21.10.2022 IT 202200021699
(43) Date of publication of application: 24.04.2024
(73) Proprietor: DENSO THERMAL SYSTEMS S.p.A., 10046 Poirino (Torino) (IT)
(72) Inventor: BALZO, Michele, I-10046 POIRINO (Torino) (IT)
(74) Representative: Vanzini, Christian

(56) References cited:
- EP-A1- 2 138 335
- EP-A2- 0 330 154
- FR-A1- 2 825 948

## Description

The present invention refers to an assembly comprising a rotating element and a tie-rod coupled to the rotating element, the tie-rod being hinged to the rotating element about a hinge axis parallel to the rotation axis of the rotating element.

A specific example of the field of application of the invention consists in the kinematics used for moving flaps used for conveying air in automotive air conditioning systems. EP 0330154 A2 discloses an assembly according to the preamble of claim 1. FR 2825948 A1 discloses a car heater comprising two valves linked by a connecting rod attached to them by pivots. EP 2138335 A1 discloses an operating device having a drive shaft that is in articulated connection by a connecting rod with a drive shaft.

One object of the present invention is that of making available a solution for the coupling between a rotating element and a tie rod of an assembly, that is easy to make. A further object of the invention is that of making available a coupling solution that makes it possible to easily assemble the tie rod of said assembly, but at the same time to avoid the unwanted release of the tie rod during operation.

In the face of such aims, the object of the invention is an assembly having the features of claim 1. Particularly, the rotating element and tie-rod in such an assembly are of plastic material, wherein the tie-rod comprises, at at least one end thereof, a fork formed from a pair of tongues that have respective pins extending towards each other,
wherein, the rotating element comprises, on a surface thereof facing towards the at least one end of the tie-rod, a coupling formation protruding from the surface of the rotating element, wherein a through hole, or a pair of blind holes, adapted to receive said pins, is/are formed through the coupling formation, a top end of the coupling formation having a wedge portion configured to cause the tongues of the fork to temporarily spread apart during mounting of the tie-rod onto the rotating element, and
wherein on said surface of the rotating element there is formed a pair of grooves arranged on opposite sides of the coupling formation, said grooves being configured to be engaged by respective end protrusions of the tongues in a partial range of the angular stroke of the tie-rod relative to the rotating element.

The tie-rod may therefore easily be mounted by snapping onto the rotating element, without therefore requiring the use of screws or fastening tools. It is sufficient, for this purpose, to ensure, during assembly, that the tie rod is arranged with such an angular orientation to be outside the partial range wherein the end protrusions of the tie-rod tongues engage the grooves formed in the rotating element. In contrast, if the arrangement of the rotating element during operation is such that the end protrusions of the tie-rod tongues are always in engagement with the grooves formed in the rotating element, the tongues are prevented from inadvertently widening thereby leading to the uncoupling of the tie-rod.

Other advantages of the assembly according to the invention will become apparent from the following detailed description of an embodiment of the invention, made with reference to the accompanying drawings, which are provided for illustrative and nonlimiting purposes only, wherein
Figure 1 is a partial cross-section view of an air conditioning unit provided with a flap/tie-rod assembly according to the invention;
Figure 2 is a perspective view of a tie-rod of the flap/tie-rod assembly of the air conditioning unit of Figure 1;
Figure 3 is a perspective view of the flap/tie-rod assembly of the air conditioning unit of Figure 1;
Figure 4 is a perspective view of a detail of the assembly of Figure 3;
Figure 5 is a perspective view of a detail of the tie-rod of Figure 2;
the figures from 6 to 9 are perspective views that show different steps for the mounting of the tie-rod onto a flap;
Figure 10 is a side elevation view that shows the angular relationship between the tie-rod and the flap during operation; and
Figure 11 is a cross-sectional view taken at the hinge axis of the tie-rod to the flap.

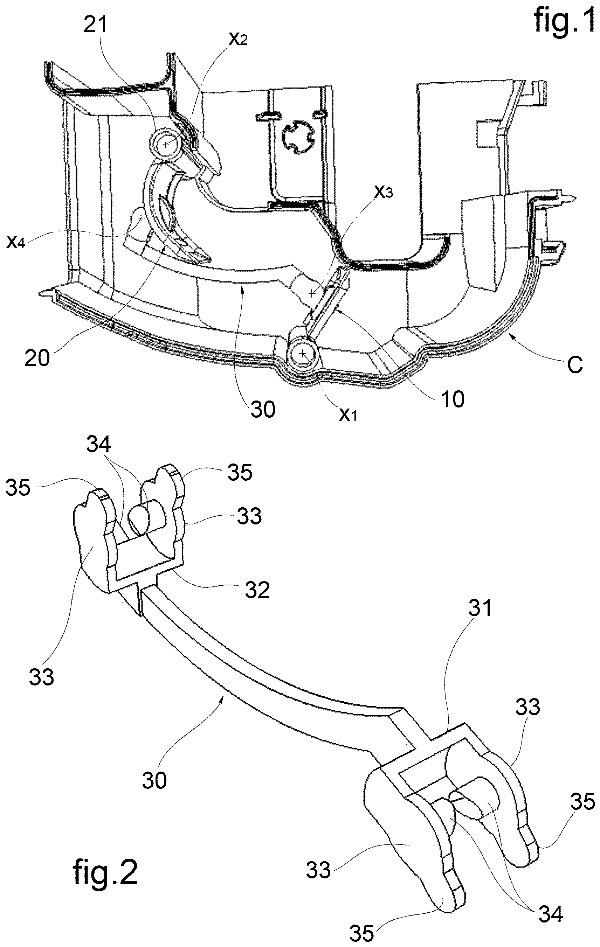

In Figure 1 a detail is shown of a housing C of an air conditioning system for an automotive, inside which air conveyancing channels are conventionally formed. The housing C supports those mobile flaps used to control the flow of air within the conveyancing channel formed in the housing C.

Figure 1 shows, in this regard, a first flap 10 and a second flap 20, having respective axes of rotation x₁ and x₂ that are parallel one from the other. The flaps in question are bound to the housing C by means of respective shafts indicated with the numerals 11 and 21, each of which opposite ends supported by the housing C.

A tie-rod 30, of plastic material, is engaged with the flaps 10 and 20, and is hinged to each thereof according to a respective hinge axis x₃, x₄ that is parallel to the axes of rotation x₁ and x₂ of the flaps 10, 20. The tie-rod 30 connects the flaps 10, 20 to each other in such a way as to allow for the transmission of motion from one to the other. More generally, the invention contemplates an assembly formed from a rotating element, of plastic material (mounted rotating on a support), for example the first flap 10, whereto the tie-rod 30 of plastic material is engaged, which allows for the transmission of motion between the rotating element 10 and another movable element, or else between the rotating element 10 and an actuator. For simplicity, in the following discussion, reference will nevertheless be made only to the applicable example, as shown in Figure 1.

With reference also to Figure 2, the tie-rod 30 is formed from a single-piece element of plastic material, comprising at both ends a respective fork 31, 32, by means of which the tie-rod engages with the respective flap 10, 20. In the following discussion only the fork 31 will be described, which connects the tie-rod 30 to the first flap 10, meaning that such description is also applicable to the other fork 32 that connects the tie-rod 30 to the second flap 20. The numerical references used within the description of one of the forks will therefore also be adopted for the other fork. According to one embodiment, not shown, the tie-rod 30 may have the fork described herein at one end only, and at the other end being provided with a different connecting structure.

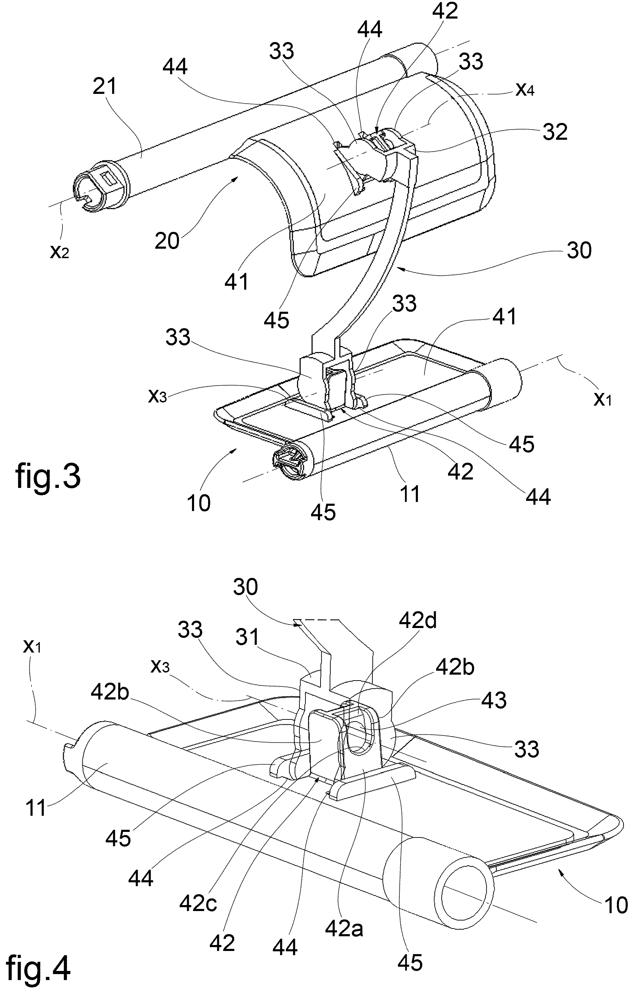

With reference also to Figures 3-5, the fork 31 is formed from a pair of elastically deformable tongues 33 that have respective pins 34 extending one towards the other. The tongues 33 furthermore have respective appendages or end protrusions 35, whose function will be described hereinafter.

The flap 10 comprises, on a surface 41 thereof, facing towards the end of the tie-rod 30, a coupling formation 42 protruding from the surface 41 of the flap 10. A through hole 43 is formed through the coupling formation 42 that is adapted to receive the pins 34 in order to define the respective hinge axis x₃ of the tie-rod 30 to the flap 10. According to one embodiment, not shown, in place of the through hole there may be a pair of coaxial blind holes.

Reference is herein made, in particular, to Figure 4, wherein one of the tongues of the fork is shown transparently in order to show the structure of the coupling formation 42. Such coupling formation 42 is a protruding structure having a substantially rectangular plan and comprising a base portion 42a that is directly connected to the surface 41 of the flap 10. Projecting from the base portion 42a there is a pair of retaining walls 42b that extend parallel one from the other and parallel to the hinge axis x₃. Between the retaining walls 42b, at each face of the coupling formation, a respective depression 42c is formed, at which the through hole 43 (or the pair of coaxial blind holes) is formed, which is used for the coupling with the pins 34 of the fork 31.

At the top end of the coupling formation 42, above the aforesaid through-hole 43, there is a wedge portion 42d that tapers in the distal direction. As will be clarified hereinafter, such wedge portion 42d is configured to cause the tongues 33 of the fork 31 to temporarily spread apart during mounting of the tie-rod 30 onto the flap 10.

The wedge portion 42d and the through hole 43 (or the pair of blind holes) are interposed between the retaining walls 42b of the coupling formation 42. Such retaining walls 42b extend laterally (namely in the direction parallel to the hinge axis) beyond the wedge portion 42d.

The thickness d of the base portion 42a, in the lateral direction of the coupling formation 42, is greater than the maximum thickness of the base portion 42d in the lateral direction of the coupling formation 42.

Upon the surface 41 of the flap 10 there is furthermore formed a pair of grooves 44 arranged on opposite sides of the coupling formation 42. Such grooves 44 are configured to be engaged by the end protrusions 35 of the tongues 33 within a partial range α of the angular stroke of the tie-rod 30 relative to the flap 10, which, hereinafter, will also be referred to as the working range. Beyond such working range α the angular orientation of the tie-rod 30 in relation to the flap 10 is such that the end protrusions 35 of the tongues 33 are arranged outside the respective grooves 44.

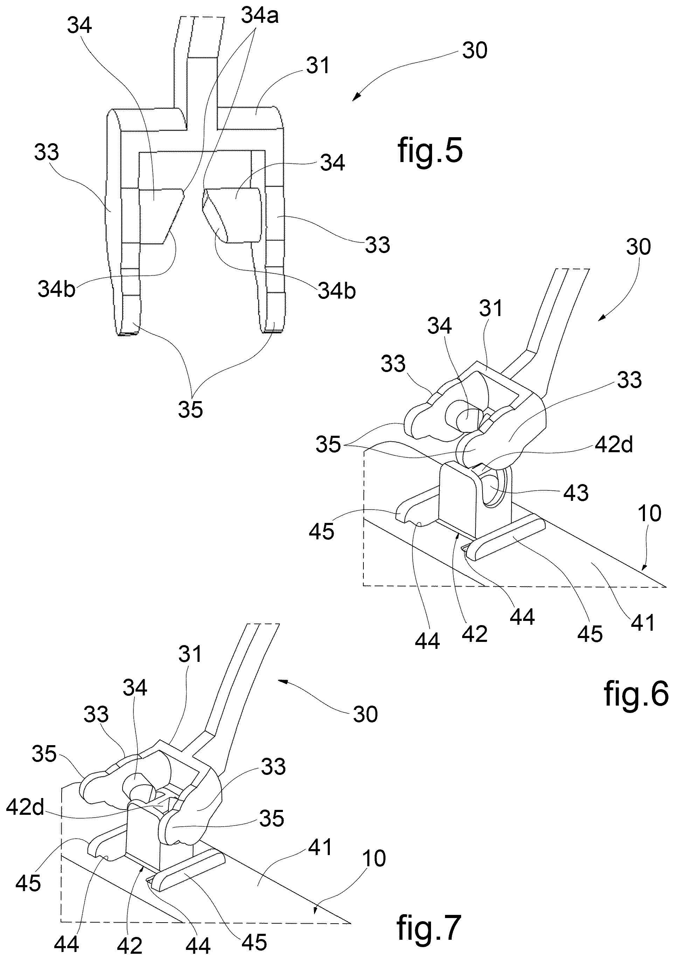

In order to mount the tie-rod 30 onto the flap 10 it is necessary to arrange the tie-rod 30 with such an inclination to prevent the end protrusions 35 from protruding into the grooves 44 (Figure 6). As the tie-rod 30 approaches the coupling formation 42 the engagement is reached between the pins 34 and the wedge portion 42d, which causes the forks 33 to spread apart (Figure 7).

During such spreading, in order to avoid interference between the retaining walls 42b and the pins 34, each of the pins 34 has an end surface comprising a top portion 34a and a portion 34b that is recessed relative to the top portion 34a. In particular, such recessed portion 34b extends obliquely relative to the longitudinal direction of the pin 34 (see in particular Figure 5).

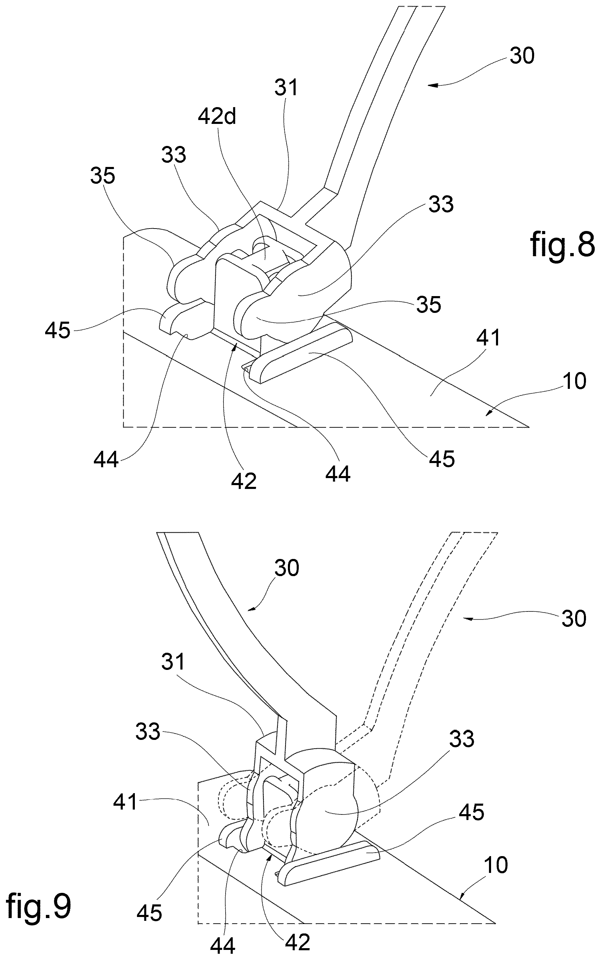

Once the wedge portion 42d has been exceeded and the area of the through hole 43 reached, the tongues 33 snap towards the coupling formation 42 driving the pins 34 into the through hole 43 (or into the pair of coaxial blind holes), thereby arriving at the position shown in Figure 8.

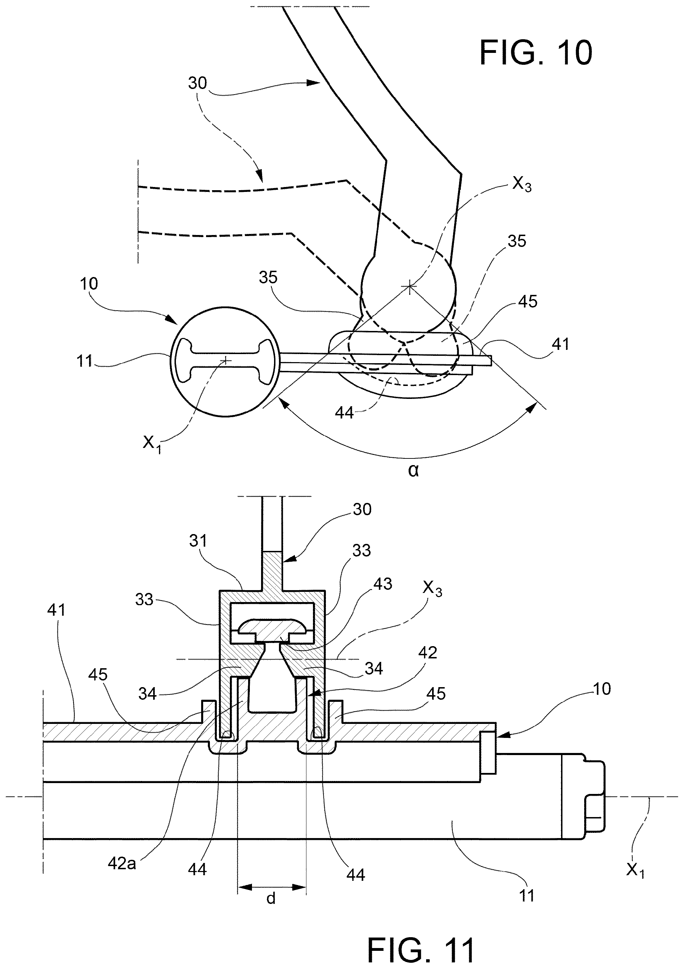

In rotating the tie-rod 30 in relation to the respective hinge axis x₃ it is possible to drive the end protrusions 35 into the respective grooves 44 of the flap 10, which prevents the tongues 33 from accidentally spreading themselves apart thereby resulting in the releasing of the tie-rod 30 (Figures 9-11). It is possible to design the extension of the working range of the tie-rod 30, arranging and sizing, in an appropriate manner, the end protrusions 35 of the tongues 33, as well as appropriately sizing the length and depth of the grooves 44, possibly forming, next to the latter, respective containment projections 45.

## Claims

1. Assembly comprising a rotating element (10, 20) and a tie-rod (30) coupled to the rotating element (10, 20), the tie-rod (30) being hinged to the rotating element (10, 20) about a hinge axis (x₃, x₄) parallel to the rotation axis (x₁, x₂) of the rotating element (10, 20),
wherein the tie-rod (30) comprises, at at least one end thereof, a fork (31, 32) formed by a pair of tongues (33),
wherein the rotating element (10, 20) comprises, on a surface (41) thereof facing towards the at least one end of the tie-rod (30), a coupling formation (42) protruding from the surface (41) of the rotating element (10, 20),
**characterized in that**
said rotating element (10, 20) and said tie-rod (30) are of plastic material,
said tongues (33) have respective pins (34) extending towards each other,
a through hole (43), or a pair of blind holes, adapted to receive said pins (34), is/are formed through the coupling formation (42), a top end of the coupling formation (42) having a wedge portion (42d) configured to cause the tongues (33) of the fork (31, 32) to temporarily spread apart during mounting of the tie-rod (30) onto the rotating element (10, 20), and **in that**
on said surface (41) of the rotating element (10, 20) there is formed a pair of grooves (44) arranged on opposite sides of the coupling formation (42), said grooves (44) being configured to be engaged by respective end protrusions (35) of the tongues (33) in a partial range of the angular stroke of the tie-rod (30) relative to the rotating element (10, 20).

2. Assembly according to claim 1, wherein the wedge portion (42d) and the through hole (43), or the pair of blind holes, are interposed between a pair of retaining walls (42b) of the coupling formation (42) extending laterally beyond the wedge portion (42d).

3. Assembly according to claim 2, wherein each of said pins (34) has an end surface comprising a top portion (34a) and a recessed portion (34b) which is recessed relative to the top portion (34a).

4. Assembly according to claim 3, wherein said recessed portion (34b) extends obliquely relative to the longitudinal direction of the pin (34).

5. Assembly according to any of the preceding claims, wherein the coupling formation (42) has a base portion (42a) whose thickness (d) in the lateral direction of the coupling formation (42) is greater than the maximum thickness of the wedge portion (42d) in the lateral direction of the coupling formation (42).

6. Assembly according to any of the preceding claims, wherein the tie-rod (30) is a single-piece element.

7. Assembly according to any of the preceding claims, wherein the rotating element (10, 20) is a flap of an air conditioning unit.

## Patentansprüche

1. Anordnung umfassend einen rotierenden Element (10, 20) und eine Zugstange (30), die mit dem rotierenden Element (10, 20) gekoppelt ist, wobei die Zugstange (30) mit dem rotierenden Element (10, 20) drehbar um eine Scharnierachse (x3, x4) verbunden ist, die sich parallel zu der Rotationsachse (x1, x2) des rotierenden Elements (10, 20) erstreckt,
wobei die Zugstange (30) an mindestens einem ihrer Enden eine Gabel (31, 32) umfasst, die durch ein Paar Zungen (33) gebildet wird,
wobei das rotierende Element (10, 20) auf einer seinen Oberfläche (41), die dem mindestens einen Ende der Zugstange (30) zugewandt ist, eine Kupplungsausbildung (42) aufweist, die aus der Oberfläche
(41) des rotierenden Elements (10, 20) hervorsteht,
**dadurch gekennzeichnet, dass**
das rotierende Element (10, 20) und die Zugstange (30) aus Kunststoffmaterial bestehen,
die Zungen (33) jeweils Stifte (34) aufweisen, die sich zueinander erstrecken,
eine Durchgangsbohrung (43) oder ein Paar Sacklöcher, die eingerichtet ist/sind, die Stifte (34) aufzunehmen,
durch die Kupplungsausbildung gebildet ist/sind, ein Oberende der Kupplungsausbildung (42) einen Keilabschnitt (42d) aufweist, der dazu konfiguriert ist, sodass die Zungen (33) der Gabel (31, 32) bei dem Montieren der Zugstange (30) auf das rotierende Element (10, 20) provisorisch auseinandertrennen,
und dass
auf der Oberfläche (41) des rotierenden Elements (10, 20) ein Paar Nuten (44) ausgebildet ist, die auf gegenüberliegenden Seiten der Kupplungsausbildung (42) angeordnet sind, wobei die Nuten (44)
dazu konfiguriert sind, von entsprechenden Endvorsprüngen (35) der Zungen (33) in einem Teilbereich des Winkelhubs der Zugstange (30) in Bezug auf das rotierende Element (10, 20) in Eingriff gebracht zu werden.

2. Anordnung nach Anspruch 1, wobei der Keilabschnitt (42d) und die Durchgangsbohrung (43) oder das Paar Sacklöcher zwischen einem Paar von Haltewänden (42b) der Kupplungsausbildung (42) angeordnet sind, die sich seitlich über den Keilabschnitt (42d) erstrecken.

3. Anordnung nach Anspruch 2, wobei jeder der Stifte (34) eine Endfläche aufweist, die einen Oberabschnitt (34a) und einen vertieften Abschnitt (34b) umfasst, der in Bezug auf den Oberabschnitt (34a) vertieft ist.

4. Anordnung nach Anspruch 3, wobei der vertiefte Abschnitt (34b) sich quer in Bezug auf die Längsrichtung des Stifts (34) erstreckt.

5. Anordnung nach einem der vorhergehenden Ansprüche, wobei die Kupplungsausbildung (42) einen Basisabschnitt (42a) aufweist, dessen Dicke (d) in der seitlichen Richtung der Kupplungsausbildung (42) größer als die Maximaldicke des Keilabschnitts (42d) in der seitlichen Richtung der Kupplungsausbildung (42) ist.

6. Anordnung nach einem der vorhergehenden Ansprüche, wobei die Zugstange (30) ein einstückiges Element ist.

7. Anordnung nach einem der vorhergehenden Ansprüche, wobei das rotierende Element (10, 20) eine Klappe einer Klimaanlage ist.

## Revendications

1. Ensemble comprenant un élément rotatif (10, 20) et une biellette de liaison (30) couplée à l'élément rotatif (10, 20), la biellette de liaison (30) étant articulée à l'élément rotatif (10, 20) autour d'un axe d'articulation (x3, x4) parallèle à l'axe de rotation (x1, x2) de l'élément rotatif (10, 20),
dans lequel la biellette de liaison (30) comprend, à au moins une de ses extrémités, une fourche (31, 32) formée par une paire de languettes (33),
dans lequel l'élément rotatif (10, 20) comprend, sur une surface (41) de celui-ci faisant face à ladite au moins une extrémité de la biellette de liaison (30), une formation de couplage (42) faisant saillie de la surface (41) de l'élément rotatif (10, 20),
**caractérisé en ce que**
ledit élément rotatif (10, 20) et ladite biellette de liaison (30) sont en matière plastique,
lesdites languettes (33) comportent respectivement des axes (34) s'étendant l'un vers l'autre,
un trou traversant (43), ou une paire de trous borgnes, adapté à recevoir lesdits axes (34), est/sont formé(s) à travers la formation de couplage (42), une extrémité supérieure de la formation de couplage (42) comportant une portion en coin (42d) configurée pour amener les languettes (33) de la fourche (31, 32) à s'écarter temporairement lors du montage de la biellette de liaison (30) sur l'élément rotatif (10, 20), et **en ce que**
sur ladite surface (41) de l'élément rotatif (10, 20) est formée une paire de rainures (44) disposées sur les côtés opposés de la formation de couplage (42), lesdites rainures (44) étant configurées pour être engagées par des saillies d'extrémité respectives (35) des languettes (33) sur une plage partielle de la course angulaire de la biellette de liaison (30) par rapport à l'élément rotatif (10, 20).

2. Ensemble selon la revendication 1, dans lequel la portion en coin (42d) et le trou traversant (43), ou la paire de trous borgnes, sont interposés entre une paire de parois de retenue (42b) de la formation de couplage (42) s'étendant latéralement au-delà de la portion en coin (42d).

3. Ensemble selon la revendication 2, dans lequel chacun desdits axes (34) comporte une surface d'extrémité comprenant une portion supérieure (34a) et une portion en retrait (34b) qui est en retrait par rapport à la portion supérieure (34a).

4. Ensemble selon la revendication 3, dans lequel ladite portion en retrait (34b) s'étend obliquement par rapport à la direction longitudinale de l'axe (34).

5. Ensemble selon l'une quelconque des revendications précédentes, dans lequel la formation de couplage (42) comporte une portion de base (42a) dont l'épaisseur (d) dans la direction latérale de la formation de couplage (42) est supérieure à l'épaisseur maximale de la portion en coin (42d) dans la direction latérale de la formation de couplage (42).

6. Ensemble selon l'une quelconque des revendications précédentes, dans lequel la biellette de liaison (30) est un élément monobloc.

7. Ensemble selon l'une quelconque des revendications précédentes, dans lequel l'élément rotatif (10, 20) est un volet d'une unité de climatisation.
